# EUROPÄISCHE PATENTANMELDUNG

(11) **EP 3 118 390 A1**
(43) Veröffentlichungstag der Anmeldung: **18.01.2017**
(21) Anmeldenummer: 16178162.0
(22) Anmeldetag: 06.07.2016
(51) Int. Cl.: E04F 21/22, G01C 9/26, E04F 15/024

(54) **BODENPLATTENIMITAT ZUR VERLEGUNG VON BODENPLATTEN**

(30) Priorität: 16.07.2015 AT 506272015
(71) Anmelder: Leitner, Franz, 4048 Puchenau (AT); Möstl, Gerhard, 4020 Linz (AT)
(72) Erfinder: Leitner, Franz, 4048 Puchenau (AT); Möstl, Gerhard, 4020 Linz (AT)
(74) Vertreter: KLIMENT & HENHAPEL

(57) **Zusammenfassung**

Bodenplattenimitat (Bᵢ) als Verlegehilfe zur Neigungs- und Höhenjustierung von Bodenplatten (B) mit einer unteren Auflagefläche (U) und einer oberen in einer Verlegeebene (E) zu verlegende Verlegefläche (0), bei dem vorgeschlagen wird, dass zumindest vier der Kontur der Auflagefläche (U) folgende Auflager (A) vorgesehen sind, die über einen Träger (17) miteinander verbunden sind, der an seiner Oberseite eine Höhenanzeige aufweist, die Höhenabweichungen der Verlegefläche (0) von der Verlegeebene (E) anzeigt, sowie mit einer Richtwaage versehen ist, die die Neigung der Verlegefläche (0) anzeigt, wobei der Träger (17) Durchgriffsöffnungen (19) bildet, durch die die Auflager (A) von der Oberseite des Trägers (17) zugänglich sind. Nach dem Justieren des Bodenplattenimitats (Bᵢ) in einer korrekten Verlegehöhe und Neigung kann es entfernt und durch eine weitere Bodenplatte (B) ersetzt werden. Mithilfe der Erfindung wird somit das Verlegen von Bodenplatten (B) sehr erleichtert.

## Beschreibung

Die Erfindung betrifft ein Bodenplattenimitat als Verlegehilfe zur Neigungs- und Höhenjustierung von Bodenplatten mit einer unteren Auflagefläche und einer oberen in einer Verlegeebene zu verlegende Verlegefläche, gemäß dem Oberbegriff von Anspruch 1.

Bei der Verlegung von Bodenplatten im Innen- und Außenbereich ist es erforderlich, die zumeist quadratischen oder rechteckigen Bodenplatten so anzuordnen, dass deren Oberseiten eine gemeinsame Ebene bilden. Diese Ebene wird im Folgenden als Verlegeebene bezeichnet, und die einen Teil der Verlegeebene bildende Oberseite einer Bodenplatte als Verlegefläche. Die der Verlegefläche abgewandte Unterseite der Bodenplatte wird im Folgenden als Auflagefläche bezeichnet.

Die Verlegeebene kann horizontal verlaufen, oder auch ein gewünschtes Gefälle aufweisen, um etwa das Abfließen von Regenwasser zu ermöglichen. Hierfür ist die Verwendung von Auflagekörper bekannt, die in der Regel im Eckbereich der Bodenplatten anzuordnen sind, und auf denen die Bodenplatten mit ihren Auflageflächen ruhen. Falls größere Neigungen des Untergrundes ausgeglichen werden müssen, können mitunter mehrere Auflagekörper erforderlich sein, die übereinander gelegt und somit gestapelt werden. Hierfür wurden etwa Auflagekörper in Form eines Grundkörpers und auf den Grundkörper auflegbarer Auflageplättchen vorgeschlagen, wobei der Grundkörper höher ausgeführt ist als die Auflageplättchen. Vorzugsweise verfügen die Grundkörper über eine Höhe, die ein ganzzahliges Vielfaches der Dicke der Auflageplättchen beträgt, sodass in der Praxis ein Stapel an Auflageplättchen, der in seiner Gesamthöhe diesem ganzzahligen Vielfachen entspricht, durch einen vorzugsweise ebenfalls stapelbaren Grundkörper ersetzt werden kann. Je nach Wahl einer Anzahl an gestapelter Grundkörper und/oder Auflageplättchen in den Eckbereichen der Bodenplatten kann die aufliegende Bodenplatte in einer gewünschten Höhenlage und mit einer gewünschten Neigung verlegt werden, sodass die verlegten Bodenplatten mit ihren jeweiligen Oberseiten eine gemeinsam zu bildende Verlegeebene beschreiben.

Die Verlegung einer horizontalen Ebene mithilfe der genannten Auflagekörper erfolgt in der Regel so, dass ausgehend von einer ersten Bodenplatte in der gewünschten Höhenlage mithilfe einer Wasserwaage eine angrenzende Bodenplatte durch Hinzufügen oder Entfernen von Auflagekörpern in derselben horizontalen Höhenlage justiert wird. Dabei muss die zu verlegende Bodenplatte oftmals angehoben werden, um einen Auflagekörper hinzuzufügen oder zu entfernen. Nach jeder Veränderung der Anzahl gestapelter Auflagekörper muss die betreffende Bodenplatte wieder auf den Auflagekörpern platziert werden, um ihre Höhenlage und Neigung zu prüfen. Da diese Arbeit in gebückter Haltung ausgeführt werden muss und Bodenplatten zumeist beträchtliches Gewicht aufweisen, sind solche Verlegearbeiten in der Regel körperlich sehr beschwerlich.

Es besteht somit das Ziel der Erfindung darin, das Verlegen von Bodenplatten körperlich weniger beschwerlich zu gestalten und insbesondere ein exaktes Verlegen von Bodenplatten in einer gewünschten Verlegeebene mit und ohne Gefälle zu erleichtern.

Diese Ziele werden durch die Merkmale von Anspruch 1 erreicht. Anspruch 1 bezieht sich auf ein Bodenplattenimitat als Verlegehilfe zur Neigungs- und Höhenjustierung von Bodenplatten mit einer unteren Auflagefläche und einer oberen in einer Verlegeebene zu verlegende Verlegefläche, bei dem erfindungsgemäß vorgeschlagen wird, dass zumindest vier der Kontur der Auflagefläche folgende Auflager vorgesehen sind, die über einen Träger miteinander verbunden sind, der an seiner Oberseite eine Höhenanzeige aufweist, die Höhenabweichungen der Verlegefläche von der Verlegeebene anzeigt, sowie mit einer Richtwaage versehen ist, die die Neigung der Verlegefläche anzeigt, wobei der Träger Durchgriffsöffnungen bildet, durch die die Auflager von der Oberseite des Trägers zugänglich sind.

Die Erfindung sieht somit ein Bodenplattenimitat vor, anhand dessen die Justierung der zu verlegenden Bodenplatte vorgenommen werden kann, das aber mit geringerem Eigengewicht als die letztendlich an seiner Stelle zu verlegende Bodenplatte ausgeführt werden kann. Mit dem Bodenplattenimitat kann somit mit geringerer Kraftanstrengung hantiert werden. Die Durchgriffsöffnungen, durch die die Auflager für die Hand des Bodenverlegers von der Oberseite zugänglich sind, ermöglichen außerdem ein leichtes Hinzufügen oder Entfernen von Auflagekörpern durch kurzes Anheben des betreffenden Auflagerbereiches des Bodenplattenimitats. Das Bodenplattenimitat muss aber lediglich im Ausmaß der Höhe der Auflagerkörper angehoben werden, um einen weiteren Auflagekörper unterzulegen oder zu entfernen. Ohne Durchgriffsöffnungen müsste die Bodenplatte zumindest im Ausmaß der Höhe der gesamten benachbarten Bodenplatte angehoben werden, um einen Auflagekörper einfügen oder entfernen zu können. Für eine Justierung der Bodenplatte sieht das Bodenplattenimitat zumindest vier der Kontur der Auflagefläche folgende Auflager vor, die somit die Auflagefläche definieren, eine Höhenanzeige, die die Verlegefläche definiert und deren Höhenabweichungen von der Verlegeebene anzeigt, sowie eine Richtwaage, die die Neigung der Verlegefläche anzeigt. Sofern Höhenlage und Neigung des Bodenplattenimitats durch Hinzufügen von Auflagekörper unter die Auflager oder deren Entfernen korrekt eingestellt wurden, kann das Bodenplattenimitat entfernt und durch eine Bodenplatte ersetzt werden.

Die Ausführung des Bodenplattenimitats ist auf unterschiedliche Weise möglich. Eine besonders einfache Ausführungsform sieht etwa vor, dass der Träger als Platte ausgeführt ist, deren Abmessungen jenen der zu verlegenden Bodenplatte entsprechen, wobei die Eckbereiche der Unterseite der Platte die Auflager bilden, die Randkanten der Oberseite der Platte die Höhenanzeige bilden und die Durchgriffsöffnungen in Form von Durchbrüchen der Platte ausgeführt sind. Die Gewichtsreduktion trotz derselben Abmessungen hinsichtlich Länge, Breite und Dicke des plattenförmigen Trägers wird bereits mithilfe der Durchbrüche erreicht, vorzugsweise kann das Bodenplattenimitat aber auch aus einem Material mit geringerem Gewicht als die zu verlegende Bodenplatte gefertigt sein. Die Randkanten zeigen dabei die Verlegehöhe zwar nicht absolut an, aber relativ zu den benachbarten Bodenplatten, die bereits verlegt wurden. Ein Niveauunterschied zwischen der Randkante und der Verlegeflächen der benachbarten Bodenplatten kann dabei durch optische oder haptische Prüfung festgestellt und in weiterer Folge korrigiert werden. Die Richtwaage kann etwa als Libelle ausgeführt sein, die im Bereich einer Randkante des Bodenplattenimitats angeordnet ist. Vorzugsweise werden dabei an zwei rechtwinkelig zueinander angeordneten Randkanten jeweils eine Libelle angeordnet, um die Neigung der Bodenplatten in zwei kartesischen Richtungen gleichzeitig überprüfen zu können.

Gemäß einer weiteren Ausführungsform könnte der Träger aber auch als Rahmen ausgeführt sein, dessen Außenabmessungen jenen der zu verlegenden Bodenplatte entsprechen, wobei die Eckpunkte der Unterkanten des Rahmens die Auflager bilden, und die Oberkanten des Rahmens die Höhenanzeige bilden. Der Rahmen folgt dem Mantel der zu verlegenden Bodenplatte, wobei die Längen der Oberkanten des Rahmens den Längen der Randkanten der zu verlegenden Bodenplatte entsprechen, und die Höhe des Rahmens der Dicke der zu verlegenden Bodenplatte. Die Gewichtsreduktion gegenüber der zu verlegenden Bodenplatte ist dabei offensichtlich, ebenso die Verwirklichung der Durchgriffsöffnungen in Form des lichten Querschnittes des Rahmens, durch die die Auflager für die Hand des Bodenverlegers von der Oberseite zugänglich sind. Die Oberkanten des Rahmens zeigen die Verlegehöhe wiederum nicht absolut an, aber relativ zu den benachbarten Bodenplatten, die bereits verlegt wurden. Ein Niveauunterschied zwischen der Oberkante und der Verlegeflächen der benachbarten Bodenplatten kann durch optische oder haptische Prüfung festgestellt und in weiterer Folge korrigiert werden. Die Richtwaage kann etwa als Libelle ausgeführt sein, die im Bereich einer Oberkante des Bodenplattenimitats angeordnet ist. Vorzugsweise werden dabei an zwei rechtwinkelig zueinander angeordneten Oberkanten jeweils eine Libelle angeordnet, um die Neigung der Bodenplatten in zwei kartesischen Richtungen gleichzeitig überprüfen zu können.

Gemäß einer weiteren Ausführungsform wird vorgeschlagen, dass die Höhenanzeige und die Richtwaage von zumindest zwei am Träger befestigten Detektoren für einen in einer Bezugsebene für die Verlegeebene verschwenkten Laserstrahl gebildet werden. Diese Ausführung ermöglicht eine absolute Messung der Verlegehöhe und somit die Ausrichtung zu benachbarten Bodenplatten, wie in der österreichischen Patentanmeldung A 50547/2014 der Anmelder beschrieben wurde. Hierbei wird in einer oberhalb der Verlegeebene und in einem Sollabstand zu dieser Ebene parallel verlaufenden Bezugsebene ein Laserstrahl kontinuierlich verschwenkt, und mithilfe eines auf der zu verlegenden Bodenplatte angeordneten Detektors für den Laserstrahl der Ist-Abstand zwischen dieser zu verlegenden Bodenplatte und der Bezugsebene gemessen, wobei eine Auswerte- und Anzeigeeinheit des Detektors die Differenz des gemessenen Ist-Abstandes zum Soll-Abstand ermittelt und als ein die Differenz verringerndes ganzzahliges Vielfaches der Höhe eines Auflagekörpers anzeigt. Diese Vorgangsweise wird in der vorliegenden Erfindung auch für das Bodenplattenimitat vorgeschlagen, wobei zumindest zwei Detektoren nicht nur die Höhenanzeige darstellen, sondern in ihrem Zusammenwirken auch die Richtwaage, da die beiden Detektoren bei unterschiedlichen Höhenanzeigen eine gewollte oder ungewollte Neigung detektieren können.

Die Erfindung wird im Folgenden anhand von Ausführungsbeispielen mithilfe der beiliegenden Zeichnungen näher erläutert. Es zeigen dabei die
Fig. 1 zur Erläuterung der Verwendung des erfindungsgemäßen Bodenplattenimitats eine Darstellung einer Ausführungsform eines an sich bekannten Grundkörpers für ebenfalls bekannte Auflageplättchen von der Seite gesehen,
Fig. 2 eine Darstellung der Ausführungsform eines Grundkörpers gemäß Fig. 1 von oben gesehen,
Fig. 3 eine perspektivische Ansicht der Ausführungsform eines Grundkörpers gemäß Fig. 1 und 2,
Fig. 4 eine Darstellung eines Auflageplättchens von oben gesehen,
Fig. 5 eine perspektivische Ansicht des Auflageplättchens gemäß der Fig. 4,
Fig. 6 eine schematische Darstellung zur Erläuterung der Verwendung einer Ausführungsform des erfindungsgemäßen Bodenplattenimitats,
Fig. 6a eine Darstellung einer zu verlegenden Bodenplatte,
Fig. 6b eine schematische Darstellung einer ersten Ausführungsform des erfindungsgemäßen Bodenplattenimitats für die Verlegung der in der Fig. 6a gezeigten Bodenplatte,
Fig. 7 eine schematische Darstellung einer Ausführungsform eines Detektors einer ersten Ausführungsform des erfindungsgemäßen Bodenplattenimitats,
Fig. 8 eine schematische Darstellung einer zweiten Ausführungsform des erfindungsgemäßen Bodenplattenimitats, und die
Fig. 9 eine schematische Darstellung einer dritten Ausführungsform des erfindungsgemäßen Bodenplattenimitats.

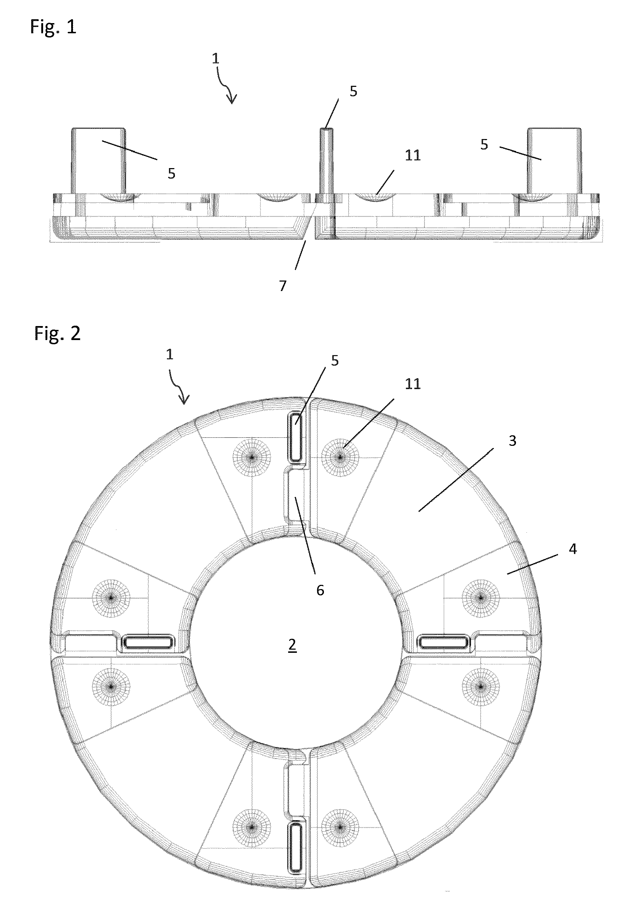

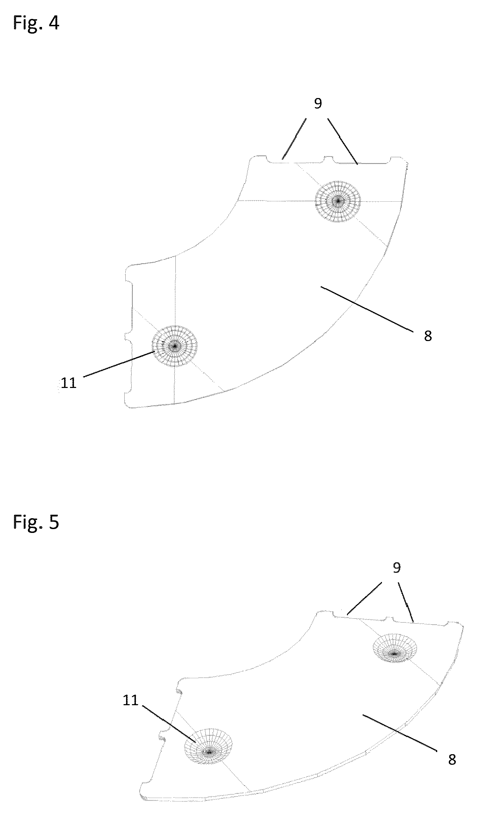

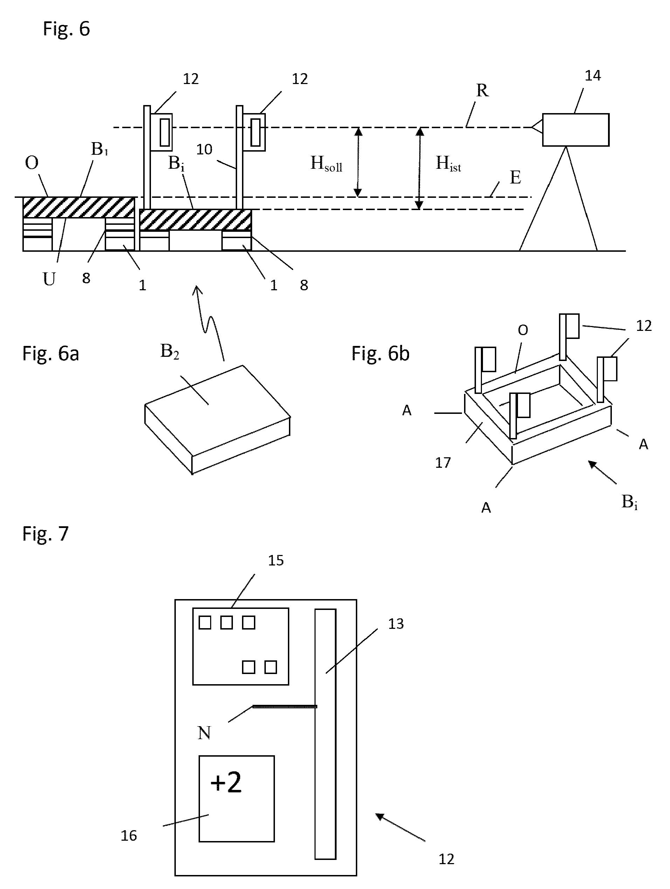

Zunächst wird zur Erläuterung möglicher Ausführungsformen des Auflagekörpers in Form eines Grundkörpers 1 und darauf auflegbarer Auflageplättchen 8 auf die Fig. 1-5 Bezug genommen, um in weiterer Folge die Funktionsweise und die Anwendung des erfindungsgemäßen Bodenplattenimitats verständlicher erläutern zu können. Der Grundkörper 1 weist einen zentralen Durchbruch 2 auf, um den Grundkörper 1 elastischer zu gestalten, sowie den Materialeinsatz zu verringern. Der Grundkörper 1 kann des Weiteren kreissektorförmige Ausnehmungen 3 aufweisen, die ebenfalls der Materialersparnis dienen. Die verbleibenden, erhöhten Plateaubereiche 4 bilden gemeinsam eine Auflageebene für die Auflageflächen U der Bodenplatten B (siehe Fig. 6), insbesondere deren Eckbereiche, oder für Auflageplättchen 8 (siehe Fig. 4 bis 6). In den erhöhten Plateaubereichen 4 sind Mulden 11 vorgesehen, deren Zweck später erläutert wird.

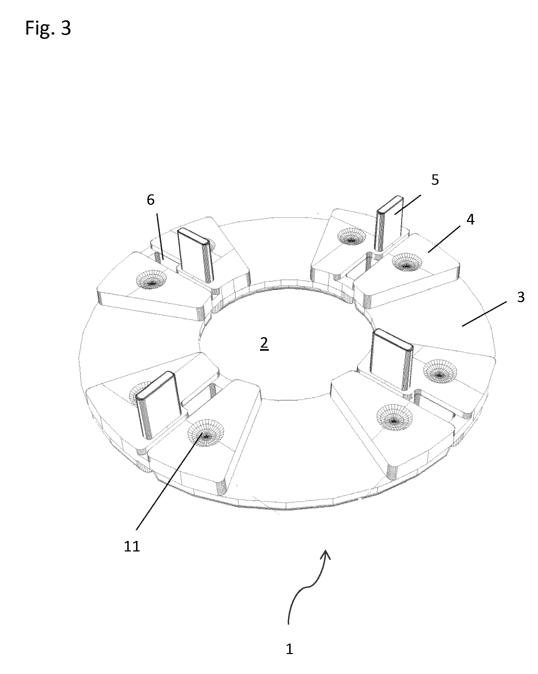

In den erhöhten Plateaubereichen 4 des Grundkörpers 1 sind des Weiteren von der Auflageebene abstehende, quaderförmige Stege 5 angeformt oder befestigt, die jeweils in einem rechten Winkel zueinander angeordnet sind. Jedem Steg 5 ist des Weiteren in radialer Richtung eine Aufnahme 6 im Grundkörper 1 zugeordnet, deren lichter Querschnitt dem Querschnitt der Stege 5 im Wesentlichen entspricht. Im gezeigten Ausführungsbeispiel sind die Aufnahmen 6 jeweils als Durchbrüche durch den Grundkörper 1 ausgeführt, wobei die Höhe der Stege 5 die Dicke des Grundkörpers 1 überschreitet. Wie insbesondere aus der Fig. 3 ersichtlich ist, sind die Stege 5, sowie die ihnen zugeordneten Aufnahmen 6 jeweils paarweise gegenüberliegend angeordnet, wobei ein erstes Paar gegenüberliegender Stege 5 ein erstes Abstandsmaß aufweist, und die ihnen jeweils zugeordneten Aufnahmen 6 ein zweites Abstandsmaß aufweisen, und der Abstand des zweiten Paares gegenüberliegender Stege 5 dem zweiten Abstandsmaß entspricht, und der Abstand der, dem zweiten Paar jeweils zugeordneten Aufnahmen 6 dem ersten Abstandsmaß entspricht. Diese Maßnahme hat den Effekt, dass zwei Grundkörper 1 aufeinander gesteckt werden können, sofern sie um 90° gegeneinander verdreht werden.

Der Grundkörper 1 weist ferner im Bereich der Stege 5 parallel zu den Stegen 5 verlaufende, radiale Schlitze 7 auf. Auch dieses Merkmal trägt zur Elastizität des Grundkörpers 1 bei, und erleichtert außerdem ein Durchtrennen des Grundkörpers 1, etwa um ihn in Rand- oder Eckbereichen einer zu verlegenden Bodenfläche anzuwenden. Als Werkstoff für den Grundkörper 1 wird ein Spezialkunststoff vorgeschlagen, etwa Ethylen-Vinylazetat (EVA), der keinen Weichmacher enthält. Es wurde nämlich festgestellt, dass Weichmacher mitunter die zumeist für den Untergrund vorgesehenen Dichtungsfolien chemisch beeinträchtigen und deren Dichtheit gefährden.

Durch Aufeinanderlegen bzw. -stecken zweier oder mehrerer Grundkörper 1 können somit unterschiedliche Gesamthöhen des Auflagekörpers verwirklicht werden, um etwa größere Neigungen oder Unebenheiten des Untergrundes auszugleichen. Dabei werden die Stege 5 des unteren Grundkörpers 1 durch die Aufnahmen 6 des darüber liegenden Grundkörpers 1 gesteckt. Aufgrund der oben beschriebenen Wahl der Abstandsmaße der Stege 5 und der Aufnahmen 6 ist hierfür lediglich eine einzige Ausführung eines Grundkörpers 1 erforderlich.

Um auch kleinere Abstufungen der Gesamthöhe des Auflagekörpers zu ermöglichen, wird des Weiteren ein Auflageplättchen 8 vorgeschlagen, das in den Fig. 4 und 5 dargestellt ist und eine geringere Höhe als der Grundkörper 1 aufweist. Auch das Auflageplättchen 8 kann aus einem Kunststoff gefertigt sein. Die dargestellte Ausführungsform des Auflageplättchens 8 ist kreissektorförmig ausgeführt, und in seinen Abmessungen so gewählt, dass es zwischen zwei benachbarten Stegen 5 eingelegt werden kann, und dabei den Bereich zwischen diesen Stegen 5 abdeckt. Hierzu weist es jeweils zwei, in einem rechten Winkel zueinander orientierte Seitenflächen auf, in denen jeweils zwei seitliche Ausnehmungen 9 zur formschlüssigen Aufnahme der Stege 5 ausgebildet sind. Wird das gezeigte Auflageplättchen 8 zwischen zwei benachbarten Stegen 5 eingelegt, so geraten die Stege 5 in Anlage mit den seitlichen Ausnehmungen 9, sodass das Auflageplättchen 8 formschlüssig gehalten wird. Auf diese Weise können auch mehrere Auflageplättchen 8 übereinander angeordnet werden, ohne die Stabilität der nun höheren Auflageebene zu gefährden.

Auch die Auflageplättchen 8 weisen Mulden 11 auf, die in Form und Größe jenen des Grundkörpers 1 (siehe Fig. 3) entsprechen. Wird ein Auflageplättchen 8 auf den Grundkörper 1 aufgelegt, so rutschen die Mulden 11 des Auflageplättchens 8 in jene des Grundkörpers 1. Auf diese Weise kann eine genau festgelegte Positionierung des Auflageplättchens 8 am Grundkörper 1 erreicht werden. Wird in weiterer Folge ein zweites Auflageplättchen 8 auf das zuvor aufgelegte, erste Auflageplättchen 8 aufgelegt, so rutschen die Mulden 11 des zweiten Auflageplättchens 8 in jene des ersten Auflageplättchens 8, sodass wiederum eine genaue gegenseitige Ausrichtung erreicht wird. Diese Ausrichtung der Auflageplättchen 8 zueinander sowie zum Grundkörper 1 stabilisiert nicht nur den Stapel aufeinanderliegender Auflageplättchen 8, sondern zentriert sie auch relativ zum Grundkörper 1 und erleichtert das korrekte Auflegen der Auflageplättchen 8.

Um größere Niveauunterschiede des Untergrundes auszugleichen können somit wahlweise etwa mehrere Grundkörper 1 aufeinander gesteckt werden, und für einen genaueren Ausgleich schließlich noch ein oder mehrere Auflageplättchen 8. Beispielsweise könnte die Dicke der Grundkörper 1 jeweils 1 cm betragen, und die Dicke der Auflageplättchen 8 jeweils 1 mm. Auf diese Weise können Niveauunterschiede mit einer Genauigkeit von 1 mm ausgeglichen werden, ohne dabei mehr als zwei unterschiedliche Elemente zu benötigen, nämlich einen einheitlich ausgeführten Grundkörper 1, sowie ein einheitlich ausgeführtes Auflageplättchen 8, die lediglich in unterschiedlicher Zahl eingesetzt werden müssen.

Eine erste Ausführungsform des erfindungsgemäßen Bodenplattenimitats Bi wird in weiterer Folge anhand der Fig. 6 und 7 erläutert. Eine Vielzahl an Bodenplatten B ist dabei so zu verlegen, dass deren auf ihrer jeweiligen Oberseite befindliche Verlegefläche O in einer zu bildenden Verlegeebene E zu liegen kommt. Die Höhenlage einer jeden Bodenplatte B kann dabei durch Aufeinanderstapeln von Auflagekörper in Form eines oder mehrerer Grundkörper 1 und/oder eines oder mehrerer Auflageplättchen 8 eingestellt werden. Dabei können etwa Unebenheiten oder ein Gefälle des Untergrundes ausgeglichen werden, oder auch variierende Stärken der Bodenplatten B. Die Bodenplatten B ruhen dabei mit ihrer auf ihrer jeweiligen Unterseite befindlichen Auflagefläche U auf ihnen zugeordnete Stapel an Auflagekörpern. Die in der Fig. 6 gezeigte Bodenplatten B₁ wurde etwa bereits in der zu bildenden Verlegeebene E verlegt. Eine erste Ausführungsform eines erfindungsgemäßen Bodenplattenimitats Bi wird in weiterer Folge anhand einer neben der bereits verlegten Bodenplatte B₁ zu verlegenden Bodenplatte B₂ erläutert, wie sie in der Fig. 6a gezeigt ist.

Hierfür umfasst das erfindungsgemäße Bodenplattenimitat Bi gemäß der in der Fig. 6b gezeigten Ausführungsform einen rahmenförmigen Träger 17, der in seinen Außenabmessungen der Bodenplatte B₂ entspricht. Der Träger 17 trägt zumindest zwei Detektoren 12 für einen Laserstrahl, der von einem Sender 14 (Fig. 6) emittiert wird. Gemäß der in der Fig. 6b gezeigten Ausführungsform sind vier Detektoren 12 vorgesehen, um die Höhenlage und die Neigung des Bodenplattenimitats Bi in zwei kartesischen Richtungen detektieren zu können, ohne das Bodenplattenimitat Bi um 90° drehen zu müssen. Der Sender 14 kann auf dem Boden aufgestellt werden, oder auch auf einer justierbaren Platte aufgelegt werden. Mithilfe einer in der Fig. 6 nicht dargestellten Strahlschwenkeinheit wird der Laserstrahl kontinuierlich verschwenkt oder rotiert, sodass der Laserstrahl eine oberhalb der zu bildenden Verlegeebene E und in einem Sollabstand Hₛₒₗₗ zu dieser Verlegeebene E parallel verlaufenden Bezugsebene R überstreicht. Zur Verlegung des Bodenplattenimitats Bi in einer gewünschten Höhenlage ist jeweils ein auf einem Detektorträger 10 angeordneter Detektor 12 in vier Eckbereichen des rahmenförmigen Trägers 17 auf der Verlegefläche O des Bodenplattenimitats Bi angeordnet. Am Detektorträger 10 ist der Detektor 12 in einer Höhe so montiert, dass der Abstand zwischen der Verlegefläche O des Bodenplattenimitats Bi zu einer Nulllinie N des Detektors 12 der Sollhöhe Hₛₒₗₗ entspricht. Jeder Detektor 12 dient somit als Höhenanzeige für den betreffenden Eckbereich, und jeweils zwei Detektoren 12 als Richtwaage zur Messung einer Neigung der Verbindungslinie ihrer jeweiligen Nulllinien N.

Eine Ausführungsform des Detektors 12 ist in der Fig. 7 dargestellt. Der Detektor 12 weist ein Detektorfenster 13 auf, das den Laserstrahl detektiert und die Höhenlage des Laserstrahls relativ zu einer Nulllinie N ermittelt. Die Nulllinie N kann dabei etwa über eine Kerbe am Detektorgehäuse visualisiert sein. Der Detektor 12 weist ferner ein Eingabefeld 15 sowie ein Ausgabefeld 16 auf. Mithilfe des Eingabefeldes 15 können unterschiedliche Einstellungen am Detektor 12 vorgenommen werden, etwa Helligkeitseinstellungen des Ausgabefeldes 16, die Aktivierung oder Deaktivierung akustischer Signale, oder einfache Programmierungen der Auswerte- und Anzeigeeinheit des Detektors 12 beispielsweise hinsichtlich einer einzustellenden Höhe der verwendeten Auflagekörper. Das Detektorfenster 13 detektiert den Laserstrahl, und die Auswerte- und Anzeigeeinheit ermittelt die Differenz zwischen der Höhenlage des detektierten Signals und der vorgegebenen Nulllinie N. In weiterer Folge wandelt die Auswerte- und Anzeigeeinheit des Detektors 12 die ermittelte Differenz in ein die Differenz verringerndes ganzzahliges Vielfaches der Höhe eines Auflagekörpers um und zeigt das ermittelte Vielfache am Ausgabefeld 16 an. In der Fig. 7 zeigt das Ausgabefeld 16 etwa einen Wert von "+2" an, das heißt, dass zwei Auflagekörper in Form von Auflageplättchen 8 aufzulegen sind, um die Differenz bestmöglich zu verringern. Falls der angezeigte Wert etwa "+12" beträgt, die Höhe der Auflageplättchen 8 beispielsweise 1 mm beträgt und die Höhe der Grundkörper 1 beispielsweise 10 mm beträgt, kann der Anwender aus dem angezeigten Wert schließen, dass entweder 12 Auflageplättchen 8 aufzulegen sind, oder ein Grundkörper 1 und zwei Auflageplättchen 8.

Im gezeigten Beispiel der Fig. 6 liegt das Bodenplattenimitat Bi mit seiner Verlegefläche O unterhalb der zu bildenden Verlegeebene E. Die Nulllinie N der auf dem Bodenplattenimitat Bi angeordneten Detektoren 12 liegt somit unterhalb der Bezugsebene R. Der Laserstrahl wird vom Detektorfenster 13 daher in einer Ist-Höhe Hᵢₛₜ oberhalb der Nulllinie N detektiert. Diese Ist-Höhe Hᵢₛₜ des detektierten Laserstrahls entspricht einem Ist-Abstand zwischen dem detektierten Laserstrahl und der Verlegefläche O des Bodenplattenimitats Bᵢ. Da der Abstand zwischen der Verlegefläche O des Bodenplattenimitats Bi zur Nulllinie N des Detektors 12 der Sollhöhe Hₛₒₗₗ des detektierten Laserstrahls und somit dem Sollabstand der Verlegefläche O zur Referenzebene R entspricht, kann aus der Differenz zwischen der ermittelten Ist-Höhe Hᵢₛₜ des Laserstrahls zur Nulllinie N jene Höhendifferenz ermittelt werden, um die die Verlegefläche O des Bodenplattenimitats Bi angehoben werden muss. Im gezeigten Beispiel der Fig. 6 und 7 beträgt die von der Auswerte- und Anzeigeeinheit ermittelte Differenz beispielsweise 2.3 mm, die in einen Wert von "+2" umgewandelt und angezeigt wird. Der Anwender erhält somit die Information, dass zwei Auflagekörper in Form von Auflageplättchen 8 aufzulegen sind, um die Differenz bestmöglich zu verringern.

Nach dem Hinzufügen zweier Auflageplättchen 8 auf den Stapel der Auflagekörper kann die Messung zur Kontrolle wiederholt werden. Der detektierte Laserstrahl liegt im genannten Beispiel nun 0.3 mm oberhalb der Sollhöhe Hₛₒₗₗ. Da ein Hinzufügen oder Entfernen eines Auflageplättchens 8 mit der Höhe von 1 mm die Differenz aber nicht mehr verringern würde, wird vom entsprechenden Detektor 12, in dessen Bereich die Auflageplättchen 8 hinzugefügt wurden, nunmehr als ganzzahliges Vielfaches der Wert "0" angezeigt. Dieser Vorgang kann für jeden Eckbereich wiederholt werden, bis jeder Detektor 12 den Wert "0" anzeigt. Der Anwender kann in weiterer Folge das Bodenplattenimitat Bi entfernen und die Verlegung der Bodenplatte B₂ vornehmen.

In der Fig. 6 wurde die Verlegung von Bodenplatten B in einer horizontalen Verlegeebene E gezeigt. Es ist aber unmittelbar ersichtlich, dass durch Einstellung eines Emissionswinkels des strahlförmigen Laserstrahls gemessen zu einer Horizontalebene auch ein Gefälle der zu bildenden Verlegeebene E verwirklicht werden kann. Der Emissionswinkel gemessen zu einer Horizontalebene entspricht in diesem Fall dem Gefälle der von den Verlegeflächen O der Bodenplatten B zu bildenden Verlegeebene E. Das gewünschte Gefälle der zu bildenden Verlegeebene E kann dabei über entsprechende Wahl des Emissionswinkels eingestellt werden. Die Verlegung der Bodenplatten B mit einem gewünschten Gefälle ist daher genauso einfach zu bewerkstelligen wie eine horizontale Verlegung.

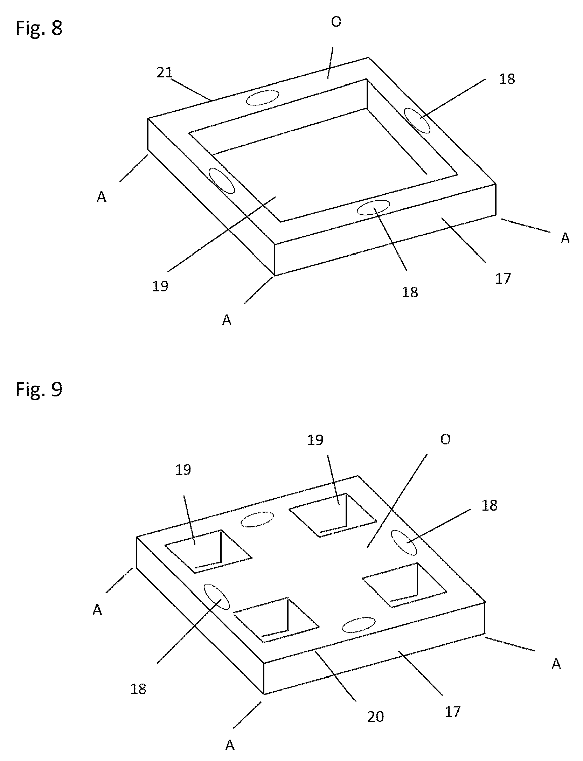

Die Fig. 8 und die Fig. 9 zeigen weitere Ausführungsformen des erfindungsgemäßen Bodenplattenimitats Bᵢ. Die Fig. 8 zeigt dabei eine Ausführungsform, bei der der Träger 17 ebenfalls als Rahmen ausgeführt ist, dessen Außenabmessungen jenen der zu verlegenden Bodenplatten B entsprechen, wobei die Eckpunkte der Unterkanten des Rahmens die Auflager A bilden, und die Oberkante 21 des Rahmens die Höhenanzeige bildet. Der Rahmen folgt dem Mantel der zu verlegenden Bodenplatten B, wobei die Längen der Oberkanten 21 des Rahmens den Längen der Randkanten der zu verlegenden Bodenplatten B entsprechen, und die Höhe des Rahmens der Dicke der zu verlegenden Bodenplatten B. Die Durchgriffsöffnungen 19 werden in Form des lichten Querschnittes des Rahmens gebildet, durch den die Auflager A für die Hand des Bodenverlegers von der Oberseite zugänglich sind. Die Oberkanten 21 des Rahmens können durch optische und haptische Prüfung auf das Höhenniveau der benachbarten Bodenplatten B gebracht werden und dienen somit als Höhenanzeige für die Verlegehöhe. Ein Niveauunterschied zwischen der Oberkante 21 und der Verlegeflächen O der benachbarten Bodenplatten B kann durch Hinzufügen oder Entfernen von Auflageplättchen 8 korrigiert werden.

Die Richtwaage ist im Ausführungsbeispiel der Fig. 8 als Libelle 18 ausgeführt, wobei im gezeigten Ausführungsbeispiel vier Libellen 18 vorgesehen sind, von denen jeweils eine im Nahbereich einer der vier Oberkanten 21 angeordnet ist. Eine Libelle 18 ist in bekannter Weise eine mit einer Flüssigkeit und einer Luft- oder Gasblase gefüllte, schwach gebogene Kunststoff- oder Glasröhre, die zur Überprüfung der horizontalen Lage des Bodenplattenimitats Bi dient. Die Libelle 18 kann auch so ausgeführt sein, dass mit ihr eine gewollte Neigung eingestellt werden kann. Mithilfe der Libellen 18 kann die Neigung des Bodenplattenimitats Bi eingestellt werden, indem wiederum Auflageplättchen 8 entsprechend hinzugefügt oder entfernt werden, auf denen das Bodenplattenimitat Bi aufliegt. Sobald sowohl die korrekte Verlegehöhe als auch die korrekte Neigung eingestellt wurde, kann das Bodenplattenimitat Bi entfernt und die Bodenplatte B₂ verlegt werden.

In der Fig. 9 ist eine weitere Ausführungsform eines erfindungsgemäßen Bodenplattenimitats Bi gezeigt, bei der der Träger 17 als Platte ausgeführt ist, deren Abmessungen jenen der zu verlegenden Bodenplatten B entsprechen, wobei die Eckbereiche der Unterseite der Platte die Auflager A bilden, die Randkanten 20 der Oberseite der Platte die Höhenanzeige bilden und die Durchgriffsöffnungen 19 in Form von Durchbrüchen der Platte ausgeführt sind. Mithilfe der in den Eckbereichen der Platte angeordneten Durchbrüche sind die Auflager A für die Hand des Bodenverlegers von der Oberseite der Platte zugänglich. Die Gewichtsreduktion trotz derselben Abmessungen hinsichtlich Länge, Breite und Dicke des plattenförmigen Trägers wird bereits durch die Durchbrüche 19 erreicht, kann aber auch durch die Wahl eines Materials mit geringerem Gewicht als die zu verlegenden Bodenplatten B erfolgen. Die Randkanten 20 der Oberseite der Platte können wiederum durch optische und haptische Prüfung auf das Höhenniveau der benachbarten Bodenplatten B gebracht werden und dienen somit als Höhenanzeige für die Verlegehöhe. Ein Niveauunterschied zwischen den Randkanten 20 und der Verlegeflächen O der benachbarten Bodenplatten B kann durch Hinzufügen oder Entfernen von Auflageplättchen 8 korrigiert werden.

Die Richtwaage ist analog zur Ausführungsform gemäß der Fig. 8 als Libelle 18 ausgeführt, die im Bereich einer Randkante 20 des Bodenplattenimitats Bi angeordnet ist. Vorzugsweise wird dabei zumindest an zwei rechtwinkelig zueinander angeordneten Randkanten 20 jeweils eine Libelle 18 angeordnet, um die Neigung der Bodenplatten B in zwei kartesischen Richtungen gleichzeitig überprüfen zu können. Im Beispiel der Fig. 9 sind an jeder der vier Randkanten 20 Libellen 18 angeordnet. Mithilfe der Libellen 18 kann wiederum die Neigung des Bodenplattenimitats Bi eingestellt werden, indem Auflageplättchen 8 entsprechend hinzugefügt oder entfernt werden, auf denen das Bodenplattenimitats Bi aufliegt. Sobald sowohl die korrekte Verlegehöhe als auch die korrekte Neigung eingestellt wurde, kann das Bodenplattenimitat Bi entfernt und die Bodenplatte B₂ verlegt werden.

Das Bodenplattenimitat Bi kann freilich auf vielfältige Weise ausgeführt werden. So könnte es etwa in seinen Abmessungen verstellbar ausgeführt sein, um es an unterschiedliche Bodenplatten B anpassen zu können. Um eine Einstellbarkeit auf unterschiedliche Dicken der zu verlegenden Bodenplatten B zu gewährleisten könnten einstellbare oder austauschbare Auflager A vorgesehen sein. Die Einstellung der korrekten Verlegehöhe der Verlegeflächen O könnte mithilfe ausklappbarer oder unbeweglich montierter Flügel erleichtert werden, die auf der Verlegefläche O des Bodenplattenimitats Bi befestigt sind und den Mantel des Bodenplattenimitats Bi seitlich überragen. Die Verlegefläche O wird somit gewissermaßen in seitliche Richtungen vergrößert. Das Bodenplattenimitat Bi liegt hierbei mit diesen Flügeln auf bereits verlegten Bodenplatten B auf, sodass es auf der korrekten Verlegehöhe gehalten wird. In weitere Folge können eine entsprechende Anzahl an Auflageplättchen 8 unter die Auflager A gelegt werden, bis das Bodenplattenimitat Bi stabil auf den Auflageplättchen 8 aufliegt und das Bodenplattenimitat Bi durch eine weitere Bodenplatte B ersetzt werden kann.

Mithilfe der Erfindung wird somit das Verlegen von Bodenplatten B sehr erleichtert und insbesondere ein exaktes Verlegen von Bodenplatten B mit einem gewünschten Gefälle ermöglicht.

## Patentansprüche

1. Bodenplattenimitat (Bi) als Verlegehilfe zur Neigungs- und Höhenjustierung von Bodenplatten (B) mit einer unteren Auflagefläche (U) und einer oberen in einer Verlegeebene (E) zu verlegende Verlegefläche (O), **dadurch gekennzeichnet, dass** zumindest vier der Kontur der Auflagefläche (U) folgende Auflager (A) vorgesehen sind, die über einen Träger (17) miteinander verbunden sind, der an seiner Oberseite eine Höhenanzeige aufweist, die Höhenabweichungen der Verlegefläche (O) von der Verlegeebene (E) anzeigt, sowie mit einer Richtwaage versehen ist, die die Neigung der Verlegefläche (O) anzeigt, wobei der Träger Durchgriffsöffnungen (19) bildet, durch die die Auflager (A) von der Oberseite des Trägers (17) zugänglich sind.

2. Bodenplattenimitat (Bi) nach Anspruch 1, **dadurch gekennzeichnet, dass** der Träger (17) als Platte ausgeführt ist, deren Abmessungen jenen der zu verlegenden Bodenplatte (B) entsprechen, wobei die Eckbereiche der Unterseite der Platte die Auflager (A) bilden, die Randkanten (20) der Oberseite der Platte die Höhenanzeige bilden und die Durchgriffsöffnungen (19) in Form von Durchbrüchen der Platte ausgeführt sind.

3. Bodenplattenimitat (Bi) nach Anspruch 1, **dadurch gekennzeichnet, dass** der Träger (17) als Rahmen ausgeführt ist, dessen Außenabmessungen jenen der zu verlegenden Bodenplatte (B) entsprechen, wobei die Eckpunkte der Unterkanten des Rahmens die Auflager (A) bilden, und die Oberkante (21) des Rahmens die Höhenanzeige bildet.

4. Bodenplattenimitat (Bi) nach einem der Ansprüche 1 bis 3, **dadurch gekennzeichnet, dass** es sich bei der Richtwaage um zumindest eine Libelle (18) handelt.

5. Bodenplattenimitat (Bi) nach Anspruch 1, **dadurch gekennzeichnet, dass** die Höhenanzeige und die Richtwaage von zumindest zwei am Träger (17) befestigten Detektoren (12) für einen in einer Bezugsebene (R) für die Verlegeebene (E) verschwenkten Laserstrahl gebildet werden.
